(19) Europäisches Patentamt / European Patent Office / Office européen des brevets

(11) **EP 2 821 834 A1**

(12) **EUROPEAN PATENT APPLICATION**

(43) Date of publication:
**07.01.2015 Bulletin 2015/02**

(51) Int Cl.:
***G02B 13/00*** *(2006.01)*     ***G02B 9/14*** *(2006.01)*

(21) Application number: **14175586.8**

(22) Date of filing: **03.07.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority:  **05.07.2013   JP 2013141465**

(71) Applicant: **Fujifilm Corporation**
**Minato-ku**
**Tokyo (JP)**

(72) Inventors:
• **Ishikawa, Hiromi**
  **Kanagawa-ken (JP)**
• **Ohta, Yasunori**
  **Kanagawa-ken (JP)**
• **Inoue, Tomoki**
  **Kanagawa-ken (JP)**

(74) Representative: **Klunker . Schmitt-Nilson . Hirsch**
**Patentanwälte**
**Destouchesstraße 68**
**80796 München (DE)**

(54)   **Scanning optical system, optical scanning device and radiographic image reading apparatus**

(57)     A scanning optical system that can be made compact and can provide a sufficiently small beam diameter on a surface to be scanned is provided. In a scanning optical system including a galvanometer mirror having a mirror (4a) that reflects and deflects a light beam emitted from a light source and a fθ lens that focuses the deflected light beam on a surface to be scanned, the fθ lens includes, in order from the galvanometer mirror side, a first lens (L1) which is a spherical lens having a positive refractive power, a second lens (L2) which is a spherical lens having a negative refractive power, and a third lens (L3) which is a spherical lens having a positive refractive power. The fθ lens satisfies conditional expression (1) below:

$$1.542 \leq f/f1 \leq 7.828 \qquad (1),$$

where f is a focal length of the entire fθ lens system, and f1 is a focal length of the first lens (L1).

**Description**

BACKGROUND OF THE INVENTION

Field of the Invention

The present invention relates to an optical scanning device for scanning a surface to be scanned made of a recording material, or the like, with a light beam.

The invention also relates to a scanning optical system including a fθ lens for use with the above-described optical scanning device.

The invention also relates to a radiographic image reading apparatus for reading a radiographic image, which is recorded on a stimulable phosphor sheet, using the above-described optical scanning device.

Description of the Related Art

Conventionally, various optical scanning devices are provided, which include a mechanical optical deflector, such as a galvanometer mirror having a reciprocating pivoting mirror or a polygon mirror having a rotating mirror, for reflecting and deflecting an incoming light beam to scan a surface to be scanned with the deflected light beam. This type of optical scanning devices are often applied to optical scanning reading apparatuses for reading information recorded on a recording material by scanning the recording material, on which the information is recorded, with a light beam and photoelectrically detecting luminescent light emitted from the recording material exposed to light, or transmission light transmitted through the surface to be scanned, or reflected light reflected from the surface to be scanned. Also, this type of optical scanning devices are often applied to optical scanning recording apparatuses for writing information on a recording material, such as a photosensitive material that reacts to light, by scanning the recording material with a light beam that is modulated based on the information to be recorded.

In the optical scanning device using an optical deflector as described above, usually, the deflected light beam is passed through a scanning lens to be focused to a small spot diameter (which is herein referred to as "beam diameter") on a surface to be scanned, in order to keep high definition quality of reading or recording. As the scanning lens, one having the "fθ property" is typically used, so that a light beam that is deflected at a constant angular velocity scans the surface to be scanned at a constant velocity. The fθ property is a property that makes an image height on a surface to be scanned with the light beam be proportional to a deflection angle θ, and a lens having such a property is called "fθ lens".

On the other hand, as one of the above-described optical scanning reading apparatuses, a radiographic image reading apparatus for reading radiographic image information recorded on a stimulable phosphor sheet is also known, as shown in Japanese Unexamined Patent Publication No. 2003-228145 (hereinafter, Patent Document 1), for example. As also shown in Patent Document 1, a stimulable phosphor sheet includes a layer of stimulable phosphor (photostimulable phosphor), which stores energy of applied radiation. When radiation transmitted through the subject, for example, is applied to this layer, energy of the radiation is stored and a transmission radiographic image of the subject is recorded. The radiographic image reading apparatus two-dimensionally scans the stimulable phosphor sheet with the radiographic image recorded thereon with a light beam serving as excitation light, and photostimulated luminescent light emitted from the excited stimulable phosphor due to exposure to the light is detected for each minute area of the sheet to obtain an image signal representing the recorded radiographic image information.

The above-described radiographic image recording/reading systems using a stimulable phosphor sheet are used to record and read transmission radiographic images of human bodies in the medical and clinical field, and is also widely used for nondestructive testing of components in various fields, such as the fields of plant facilities, plants, such as a power generation plant, a petroleum refining plant, etc., and ships, airplanes, etc.

As a method for evaluating resolution performance of the radiographic image recording/reading systems for industrial use, those prescribed by ISO 17636-2 and EN (European Standard) 14784-1 are known. In these methods, it is required to measure the resolution performance using two wires called "Duplex wire", which is prescribed by EN 462-5 (see "Hihakai-Kensa (Nondestructive Testing) ", Vol. 61, No. 4, p. 146, 2012). In the method for evaluating the resolution performance using two wires, an image of the two wires arranged side by side is recorded on a stimulable phosphor sheet, and a readout signal with respect to the direction of arrangement of the two wires is obtained through reading processing. Then, the ratio (%) of a dip in the signal due to a clearance between the two wires to an amplitude (maximum intensity) of the signal representing the entire wire portion in the readout signal is checked. It is said, in general, that this ratio needs to be 20% or more in order to reproduce a high-resolution radiographic image.

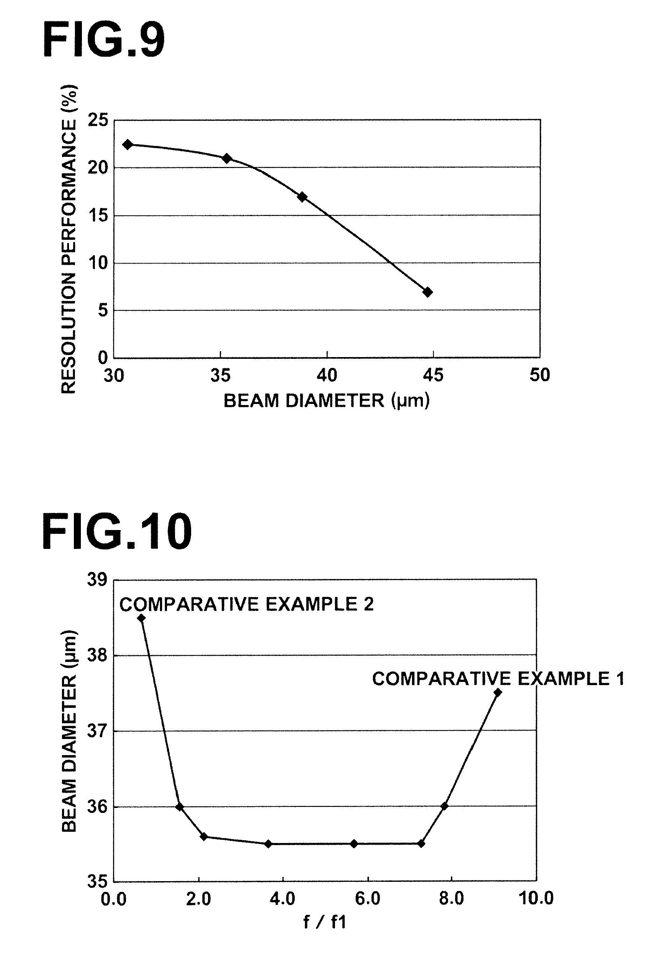

The present inventor has investigated the relationship between the resolution defined by the above-described ratio (%) and the beam diameter of excitation light on a stimulable phosphor sheet in more detail through an experiment. In this experiment, a high-definition type stimulable phosphor sheet, "UR-1", available from Fujifilm Corporation is used, the power of a laser light source for emitting a reading light beam is set at 2 mW, the pixel size is set at 25 μm x 25 μm,

and the reading speed per pixel is set at 0.7 $\mu$s (micro seconds) . FIG. 9 shows the results of the experiment. It can be seen from the results that it is necessary to set a beam diameter of not greater than 36 $\mu$m in order to ensure a resolution performance of 20% or more.

The previously described scanning optical system including a f$\theta$ lens is also widely applied to the above-described radiographic image reading apparatuses for scanning stimulable phosphor sheets. For the scanning optical system of this case, it is desired that a beam diameter of not greater than 36 $\mu$m can be set.

Conventionally, various types of scanning optical systems including a f$\theta$ lens are known. For example, Japanese Unexamined

Patent Publication No. 1(1989)-309021 (hereinafter, Patent Document 2) discloses a scanning optical system including a galvanometer mirror and four lens elements. The four lens elements includes, in order from the galvanometer mirror side, a spherical lens having a negative power (refractive power), a spherical lens having a positive power and having a planar surface on one side, a cylindrical lens having a negative power in a plane perpendicular to the deflection plane and having a planar surface on one side, and a cylindrical mirror having a positive power in a plane perpendicular to the deflection plane.

Japanese Patent Publication No. 60 (1985) - 053294 (hereinafter, Patent Document 3) discloses a scanning optical system including, in order from the light entrance side, a first lens group having a negative power, a second lens group formed by a meniscus component with the concave surface facing the light entrance side, a third lens group formed by a meniscus component with the concave surface facing the light entrance side, and a fourth lens group having a positive power, where conditions relating to the focal length and the radius of curvature of part of the lenses are defined.

Japanese Unexamined Patent Publication No. 62(1987)-262812 (hereinafter, Patent Document 4) discloses a scanning optical system including, in order from the light entrance side, a first lens formed by a meniscus lens having a positive power, a second lens having a negative power, a third lens having a positive power and cemented together with the second lens, and a fourth lens formed by a biconvex lens having a positive power, wherein conditions relating to the refractive index, the Abbe number, and the focal length of part of the lenses are defined.

Japanese Unexamined Patent Publication No. 10(1998)-186258 (hereinafter, Patent Document 5) discloses a scanning optical system including, in order from the light entrance side, a first lens group and a second lens group, wherein the first lens group includes, in order from the light entrance side, a positive meniscus lens with the concave surface facing the light entrance side, a negative meniscus lens with the concave surface facing the light entrance side, and a negative lens, and the second lens group includes two or less positive lenses.

## SUMMARY OF THE INVENTION

However, with the scanning optical system disclosed in Patent Document 2, it is difficult to set a sufficiently small beam diameter of not greater than 36 $\mu$m on a surface to be scanned, as described above.

The scanning optical system disclosed in Patent Document 3 has a large optical path length of the entire system, and this may likely to lead to increased size of the optical scanning device.

The scanning optical systems disclosed in Patent Documents 4 and 5 have a large angle of view, and therefore it is difficult to use these scanning optical systems in combination with a galvanometer mirror, which has a relatively small range of deflection angle, typically 40° ($\pm$20° from the center of the reciprocating motion for deflection), when compared to a polygon mirror, etc.

In view of the above-described circumstances, the present invention is directed to providing a scanning optical system that uses a galvanometer mirror as an optical deflector, can be made compact, and can achieve sufficiently small beam diameter on a surface to be scanned, and an optical scanning device and a radiographic image reading apparatus.

An aspect of the scanning optical system according to the invention is a scanning optical system comprising: a galvanometer mirror that reflects and deflects a light beam emitted from a light source, a range of deflection angle of the galvanometer mirror being 40° or less; and a f$\theta$ lens that focuses the deflected light beam on a surface to be scanned, wherein the f$\theta$ lens substantially consists of, in order from the galvanometer mirror side, a first lens which is a spherical lens having a positive refractive power, a second lens which is a spherical lens having a negative refractive power, and a third lens which is a spherical lens having a positive refractive power, and conditional expression (1) below is satisfied:

$$1.542 \leq f/f1 \leq 7.828 \qquad (1),$$

where f is a focal length of the entire f$\theta$ lens system, and f1 is a focal length of the first lens.

The expression "substantially consists of" herein means that the f$\theta$ lens may include, besides the first to third lenses, lenses substantially without any power, and optical elements other than lenses, such as a cover glass.

It is desirable that the scanning optical system of the invention satisfy conditional expression (1') below:

$$2.125 \leq f/f1 \leq 7.264 \qquad (1').$$

It is desirable that the scanning optical system of the invention satisfy conditional expression (2) below:

$$0.003 \leq 1/f1 \leq 0.015 \qquad (2),$$

or it is more preferable that the scanning optical system of the invention satisfy conditional expression (2') below:

$$0.004 \leq 1/f1 \leq 0.014 \qquad (2').$$

It is desirable that the scanning optical system of the invention satisfy, in addition to at least any one of conditional expressions (1), (1'), (2) and (2'), conditional expression (3) below:

$$-0.290 \leq f2/f \leq -0.137 \qquad (3),$$

where f2 is a focal length of the second lens.

It is desirable that the scanning optical system of the invention satisfy, in addition to at least any one of conditional expressions (1), (1'), (2) and (2'), conditional expression (4) below:

$$0.383 \leq f3/f \leq 1.271 \qquad (4),$$

where f3 is a focal length of the third lens.

It is desirable that the scanning optical system of the invention focus the light beam on a stimulable phosphor sheet used as the surface to be scanned.

An aspect of the optical scanning device according to the invention is configured to scan a surface to be scanned with a light beam traveled through the above-described scanning optical system of the invention. It is desirable that the surface to be scanned with the optical scanning device according to the invention be a stimulable phosphor sheet.

An aspect of the radiographic image reading apparatus according to the invention includes the above-described optical scanning device of the invention, and is configured to detect photostimulated luminescent light emitted from each part of a stimulable phosphor sheet scanned with the optical scanning device to read a radiographic image recorded on the stimulable phosphor sheet.

The scanning optical system of the invention includes a fθ lens, which includes, in order from the galvanometer mirror side, the first lens which is a spherical lens having a positive refractive power, the second lens which is a spherical lens having a negative refractive power, and the third lens which is a spherical lens having a positive refractive power, and is configured to satisfy conditional expression (1). The thus configured scanning optical system allows setting a beam diameter of not greater than 36 $\mu$m on a surface to be scanned, as described above, and can be made compact with a sufficiently reduced length from the galvanometer mirror to the surface to be scanned. Details of these features and effects will be described later based on embodiments.

It should be noted that the requirement of setting a beam diameter of not greater than 36 $\mu$m on a surface to be scanned is not limited to the case of the above-described radiographic image reading apparatuses, and the scanning optical system of the invention can meet all such requirements in other cases.

The optical scanning device and the radiographic image reading apparatus of the invention includes the above-described scanning optical system of the invention. Therefore, they can meet the requirement of setting a beam diameter of not greater than 36 $\mu$m on a surface to be scanned. Further, the radiographic image reading apparatus, in particular, allows obtaining a high-resolution readout image.

BRIEF DESCRIPTION OF THE DRAWINGS

FIG. 1 is a sectional view illustrating the lens configuration of a scanning optical system according to Example 1 of the invention,

FIG. 2 is a sectional view illustrating the lens configuration of a scanning optical system according to Example 2 of the invention,

FIG. 3 is a sectional view illustrating the lens configuration of a scanning optical system according to Example 3 of the invention,

FIG. 4 is a sectional view illustrating the lens configuration of a scanning optical system according to Example 4 of the invention,

FIG. 5 is a sectional view illustrating the lens configuration of a scanning optical system according to Example 5 of the invention,

FIG. 6 is a sectional view illustrating the lens configuration of a scanning optical system according to Example 6 of the invention,

FIG. 7 is a sectional view illustrating the lens configuration of a scanning optical system of Comparative Example 1 relative to the invention,

FIG. 8 is a sectional view illustrating the lens configuration of a scanning optical system of Comparative Example 2 relative to the invention,

FIG. 9 is a graph for explaining a beam diameter desired for an optical scanning device,

FIG. 10 is a graph showing the relationship between a value of f/f1 and a beam diameter,

FIG. 11 is a graph showing the relationship between a value of 1/f1 and the beam diameter, and

FIG. 12 is a diagram illustrating the schematic configuration of an optical scanning device according to one embodiment of the invention.

## DESCRIPTION OF THE PREFERRED EMBODIMENTS

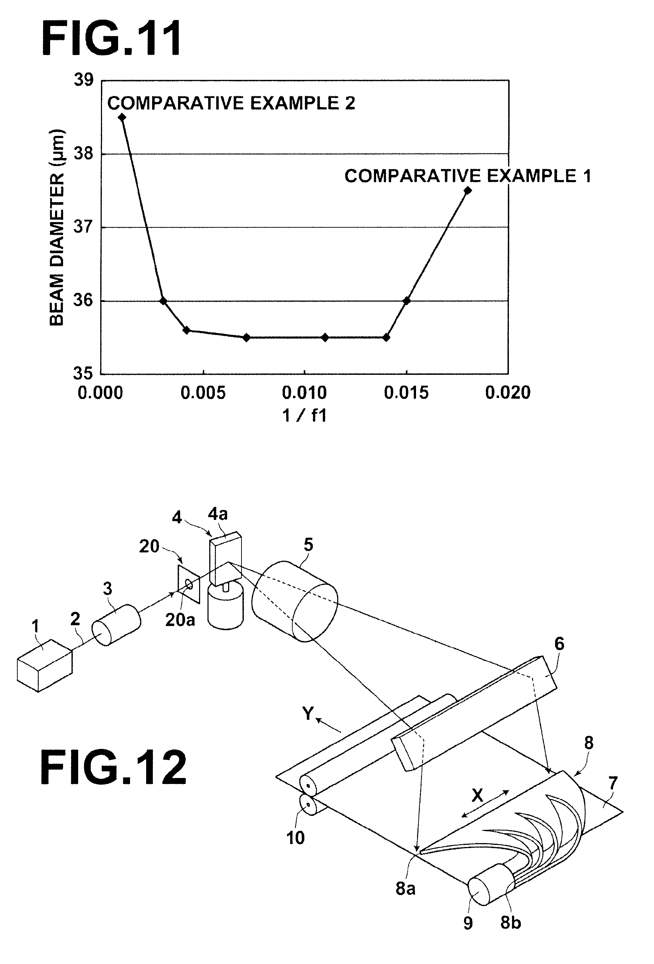

Hereinafter, embodiments of the present invention will be described in detail with reference to the drawings. A scanning optical system of the invention is applied, as one example, to the previously described radiographic image reading apparatus. First, the radiographic image reading apparatus is described with reference to FIG. 12.

A semiconductor laser 1 serving as a light source emits a light beam 2 of a wavelength of 660 nm, for example, and the light beam 2 is collimated by a collimator lens 3 and then enters a mirror 4a of a galvanometer mirror 4, which serves as an optical deflector. The mirror 4a is pivoted in a reciprocating manner through a predetermined angle to reflect and deflect the incoming light beam 2. The thus deflected light beam 2 passes through a scanning lens 5 and then is reflected downward by a long planar mirror 6 to enter a surface to be scanned 7 to scan the surface to be scanned 7 in the direction of arrow X (main scanning). It should be noted that, although the scanning lens 5 is schematically shown as one lens in FIG. 12, the scanning lens 5 is actually formed by three lenses. The detailed configuration thereof will be described later.

The surface to be scanned 7 in this example is the previously described stimulable phosphor sheet. As one example, the stimulable phosphor sheet 7 is used for nondestructive testing of industrial products forming plant facilities, plants, such as a power generation plant, a petroleum refining plant, etc., and ships, airplanes, etc. During the testing, radiation, such as X-ray, transmitted through an obj ect to be tested is applied to the sheet 7. As a result, radiation energy having an intensity distribution that corresponds to transmission radiographic image information of the object to be tested is recorded on the stimulable phosphor sheet 7.

As the stimulable phosphor sheet 7 on which the transmission radiographic image of the object to be tested is recorded is main scanned with the light beam 2, as described above, photostimulated luminescent light of an intensity that corresponds to the stored radiation energy is emitted from the part of the sheet 7 exposed to the light. The photostimulated luminescent light is collected by a light collection guide 8 and is photoelectrically detected for each main scanning position by a photo multiplier 9. The light collection guide 8 includes a light entrance end face 8a, which extends along a main scanning line on the stimulable phosphor sheet 7, and a light exit end face 8b, from which the photostimulated luminescent light that has entered via the light entrance end face 8a and propagated through the light collection guide is outputted. The photo multiplier 9 is optically connected to the light exit end face 8b.

Along with this, the stimulable phosphor sheet 7 is fed to be sub-scanned in the direction of arrow Y, which is substantially perpendicular to the main scanning direction, by a sub-scanning means 10 formed by nip rollers, or the like, thereby achieving two-dimensional optical scanning of the stimulable phosphor sheet 7. The photo multiplier 9 outputs a light detection signal that represents the transmission radiographic image recorded on the stimulable phosphor sheet 7. The light detection signal is sent as a readout image signal to an image display device, such as a liquid crystal display device or a CRT, or an image recording means, such as an optical scanning recording apparatus, for example, where the light detection signal is used to reproduce the radiographic image.

The above-described galvanometer mirror 4 and the scanning lens 5 form a scanning optical system according to one embodiment of the invention. Further, the scanning optical system formed by the galvanometer mirror 4 and the scanning lens 5 combined with the semiconductor laser 1, the collimator lens 3 and the sub-scanning means 10 form an optical scanning device according to one embodiment of the invention. It should be noted that the range of deflection angle of the light beam 2 by the galvanometer mirror 4 is relatively narrower (40° or less) than that provided by a polygon mirror, or the like, having a rotating mirror structure.

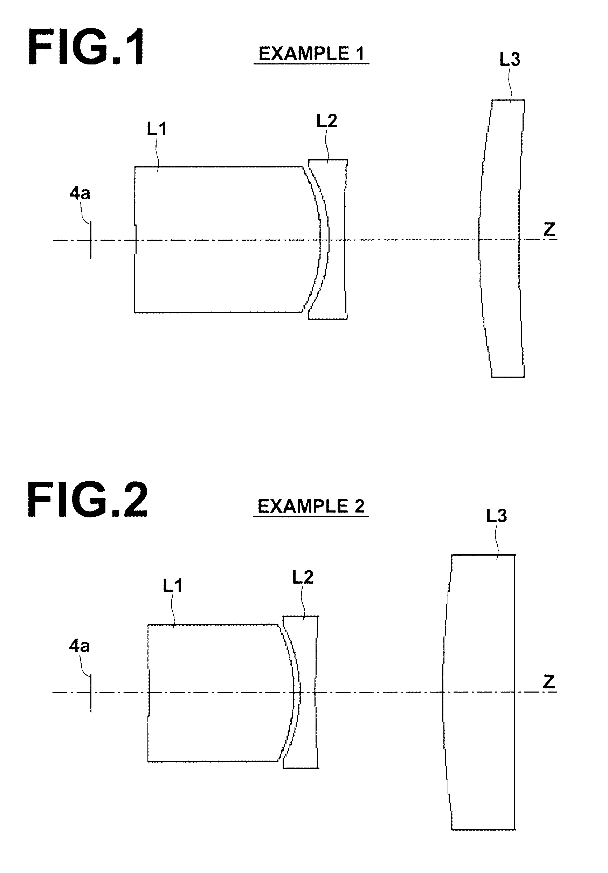

Next, the scanning optical system according to one embodiment of the invention is described with reference to FIG. 1. FIG. 1 is a sectional view illustrating the configuration of a scanning optical system of Example 1 of the invention. FIGs. 2 to 6 are sectional views illustrating the configurations of other examples according to the embodiment of the invention and correspond to scanning optical systems of Examples 2 to 6, respectively, which will be described later.

The basic structure of the scanning optical system of the invention and effects thereof are explained based on the scanning optical system of Example 1, and the same explanations are not repeated in the description of scanning optical systems of the following examples and comparative examples.

In FIG. 1, the left side in the drawing is referred to as "light source side" and the right side in the drawing is referred to as "surface to be scanned side". The scanning optical system according to this embodiment includes, besides the galvanometer mirror 4 (only the mirror 4a of the galvanometer mirror 4 is shown in the drawing), substantial lenses including a first lens L1 having a positive refractive power, which is disposed next to the galvanometer mirror 4 on the surface to be scanned side, a second lens L2 having a negative refractive power, which is disposed next to the first lens L1 on the surface to be scanned side, and a third lens L3 having a positive refractive power, which is disposed next to the second lens L2 on the surface to be scanned side. In the following description, a lens "having a positive refractive power" is simply referred to as a "positive" lens, and a lens "having a negative refractive power" is simply referred to as a "negative" lens.

All the lenses L1 to L3 are spherical lenses and form the scanning lens 5 (see FIG. 12) having the fθ property. The combination of the refractive powers of the three lenses, namely, "positive", "negative" and "positive" in order from the light entrance side, is common to Examples 2 to 6, which will be described later.

In this embodiment, conditional expression (1) below is satisfied:

$$1.542 \leq f/f1 \leq 7.828 \qquad (1),$$

where f is a focal length of the entire system of the scanning lens 5, and f1 is a focal length of the first lens L1.

Table 9 shows values of the focal length f of the entire system, the focal length f1 of the first lens L1, a focal length f2 of the second lens L2, and a focal length f3 of the third lens L3, and values of f1/f, f2/f, f3/f, f1/f2, f1/f3, 1/f1, and f/f1 (unit of measure: mm) of the scanning optical systems of Example 1 and Examples 2 to 6, which will be described later, as well as Comparative Examples 1 and 2. Table 9 also shows values of a beam diameter d (unit of measure: $\mu$m) in the examples and the comparative examples. It should be noted that, in Table 9, conditions relating to conditional expressions (1) to (4) are accompanied by the number of each conditional expression. Further, in Table 9, particularly necessary conditions are indicated by the darker backgrounds of the minimum value and the maximum value thereof.

The beam diameter d is calculated as a full width at half maximum with respect to the case where the light beam 2 has a wavelength of 660 nm, as described above. In this case, the calculation is performed with assuming that an apertured plate 20, as shown in FIG. 12, is disposed in the optical path of the light beam 2 collimated by the collimator lens 3, and the diameter of the aperture 20a is 10 mm. Further, it is assumed that the range of deflection angle of the light beam 2 by the galvanometer mirror 4 is 40° ($\pm$20°), the main scanning length is 356 mm, and the distance from the mirror 4a to the surface to be scanned is 650 mm. The wavelength, the diameter of the aperture 20a, the range of deflection angle, the main scanning length and the distance from the mirror 4a to the surface to be scanned described above are common to Examples 2 to 6 and Comparative Examples 1 and 2, which will be described later.

Further, FIG. 10 shows the relationship between the value of f/f1 and the beam diameter d with respect to these eight examples. As can be seen from FIG. 10 and Table 9, the beam diameter d on the stimulable phosphor sheet 7 can be set to be not greater than the previously-mentioned value of 36 $\mu$m when the value of f/f1 satisfies conditional expression (1). This allows obtaining a readout image signal representing a high-resolution readout image.

In Comparative Examples 1 and 2, where the value of f/f1 is out of the range defined by conditional expression (1), the beam diameter d is 37.5 $\mu$m and 38.5 $\mu$m, respectively, and the requirement of setting a beam diameter d of not greater than 36 $\mu$m cannot be met.

It can be seen that a particularly small beam diameter d of not greater than 35.6 $\mu$m can be set when, in particular, the range defined by conditional expression (1') below, in the range defined by conditional expression (1), is satisfied:

$$2.125 \leq f/f1 \leq 7.264 \qquad (1').$$

Table 9 also shows the focal length f of the entire system of the scanning lens 5. The focal length f in this embodiment is 509.2 mm. As described later, the distance between the mirror 4a and the first lens L1 (the most mirror 4a-side lens) of the scanning lens 5 in Example 1 is shown in Table 1, and the distance is about 15 mm. In this embodiment, the distance from the mirror 4a of the galvanometer mirror 4 to the surface to be scanned is 650 mm, as mentioned above, and the total of surface distances Di, which will be described later, shown in Table 1 is also 650 mm. However, this is not intended to limit the scanning optical system of the invention and the distance can easily be made to be 650 mm or less. Therefore, in a case where the mirror 6 shown in FIG. 12 is disposed at a position about half the distance, it is easy to make the length of each of the transverse optical path from the mirror 4a to the mirror 6 and the longitudinal optical path from the mirror 6 to the surface to be scanned be not greater than around 350 mm, thereby achieving downsizing of the optical scanning device.

The above-described two advantageous effects, namely, that a beam diameter d of not greater than 36 $\mu$m can be set and that downsizing of the optical scanning device can be achieved, are similarly obtained in Examples 2 to 6 described later.

The scanning optical system of this embodiment also satisfies conditional expression (2) below:

$$0.003 \leq 1/f1 \leq 0.015 \qquad (2).$$

The relationship between the value of 1/f1 and the beam diameter d is shown in FIG. 11. As can be seen from FIG. 11 and Table 9, the beam diameter d on the surface to be scanned can be set to be not greater than 36 $\mu$m when the value of 1/f1 satisfies conditional expression (2). Further, a particularly small beam diameter d of not greater than 35.6 $\mu$m can be set when, in particular, the range defined by conditional expression (2') below, in the range defined by conditional expression (2), is satisfied:

$$0.004 \leq 1/f1 \leq 0.014 \qquad (2').$$

Further, it can be seen from Table 9 that a beam diameter d of not greater than 36 $\mu$m can be set when two conditional expressions (3) and (4) below are satisfied independently or in combination, in addition to at least any one of conditional expressions (1), (1'), (2) and (2'):

$$-0.290 \leq f2/f \leq -0.137 \qquad (3)$$

and

$$0.383 \leq f3/f \leq 1.271 \qquad (4).$$

Next, specific examples of the scanning optical system of the invention are described. All the scanning optical systems of Examples 1 to 6 and Comparative Examples 1 and 2 described below include three spherical lenses.

*Example* 1

FIG. 1 shows a sectional view of the scanning optical system of Example 1. It should be noted that details of FIG. 1 are as explained above and the same explanation is not repeated in the following description unless otherwise necessary. The scanning optical system of Example 1 includes, in order from the light beam entrance side toward the surface to be scanned side, the mirror 4a of the galvanometer mirror 4, the positive first lens L1 which is a meniscus lens, the negative second lens L2 which is a biconcave lens, and the positive third lens L3 which is a meniscus lens.

Table 1 shows basic lens data of the scanning optical system of Example 1. In the following description, the mirror 4a side viewed from the elements disposed between the mirror 4a and the surface to be scanned 7 is referred to as "rear side" and the surface to be scanned 7 side is referred to as "front side". In Table 1, each value in the column of "Si" represents the surface number of the i-th (i = 1, 2, 3, ...) surface, where the surface of the mirror 4a is the 1st surface, the rear surface of the next front-side element is the 2nd surface, and the number is sequentially increased toward the front side. Each value in the column of "Ri" represents the radius of curvature of the i-th surface. Each value in the column of "Di" represents the surface distance between the i-th surface and the i+1-th surface along the optical axis Z. It should be noted that, with respect to the surface indicated by the surface number "7", the i+1-th surface is the surface to be scanned. Each value in the column of "Ndj" represents the refractive index with respect to the d-line (the wavelength of 587.6 nm) of the j-th (j = 1, 2, 3) lens, where the most rear-side lens is the 1st lens and the number is sequentially increased toward the front side. Each value in the column of "vdj" represents the Abbe number with respect to the d-line of the j-th lens.

It should be noted that the unit of measure of the values of the radius of curvature R and the unit of measure of the values of the surface distance D shown in Table 1 are millimeter. The numerical values shown in Table 1 are rounded at predetermined decimal places. The sign with respect to the radius of curvature means that a surface shape that is convex toward the rear side is positive and a surface shape that is convex toward the front side is negative. The above-described manners of description also apply to Tables 2 to 8, which will be shown later.

[Table 1]

| Example 1: Lens Data<br>Wavelength 660 nm, Deflection angle 40° (±20°), Aperture diameter Φ10 mm | | | | |
|---|---|---|---|---|
| Si (Surface number) | Ri (Radius of curvature) | Di (Surface distance) | Ndj (Refractive index) | vdj (Abbe number) |
| 1 | | 14.996 | | |
| 2 | -277.646 | 61.092 | 1.72825 | 28.32 |
| 3 | -43.795 | 2.791 | | |
| 4 | -40.472 | 5.000 | 1.51680 | 64.20 |
| 5 | 321.703 | 44.639 | | |
| 6 | 202.097 | 13.210 | 1.51680 | 64.20 |
| 7 | 503.417 | 508.270 | | |

*Example 2*

FIG. 2 shows a sectional view of a scanning optical system of Example 2. The scanning optical system of Example 2 includes, in order from the light beam entrance side toward the surface to be scanned side, the mirror 4a of the galvanometer mirror 4, the positive first lens L1 which is a meniscus lens, the negative second lens L2 which is a biconcave lens, and the positive third lens L3 which is a meniscus lens. Table 2 shows basic lens data of the scanning optical system of Example 2.

[Table 2]

| Example 2: Lens Data<br>Wavelength 660 nm, Deflection angle 40° (±20°), Aperture diameter Φ10 mm | | | | |
|---|---|---|---|---|
| Si (Surface number) | Ri (Radius of curvature) | Di (Surface distance) | Ndj (Refractive index) | vdj (Abbe number) |
| 1 | | 19.045 | | |
| 2 | -269.859 | 47.552 | 1.72825 | 28.32 |
| 3 | -46.634 | 1.992 | | |
| 4 | -42.792 | 5.001 | 1.51680 | 64.20 |
| 5 | 312.443 | 42.057 | | |
| 6 | 254.694 | 23.594 | 1.51680 | 64.20 |
| 7 | 3630.594 | 510.761 | | |

*Example 3*

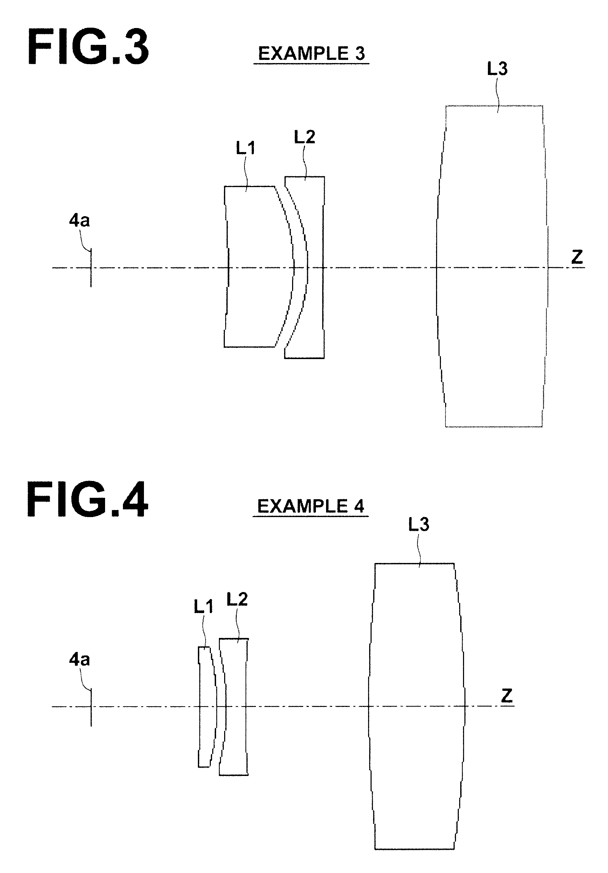

FIG. 3 shows a sectional view of a scanning optical system of Example 3. The scanning optical system of Example 3 includes, in order from the light beam entrance side toward the surface to be scanned side, the mirror 4a of the galvanometer mirror 4, the positive first lens L1 which is a meniscus lens, the negative second lens L2 which is a biconcave lens, and the positive third lens L3 which is a biconvex lens. Table 3 shows basic lens data of the scanning optical system of Example 3.

[Table 3]

| Example 3: Lens Data<br>Wavelength 660 nm, Deflection angle 40° (±20°), Aperture diameter Φ10 mm | | | | |
|---|---|---|---|---|
| Si (Surface number) | Ri (Radius of curvature) | Di (Surface distance) | Ndj (Refractive index) | νdj (Abbe number) |
| 1 | | 44.986 | | |
| 2 | -198.965 | 21.514 | 1.72825 | 28.32 |
| 3 | -51.120 | 4.519 | | |
| 4 | -47.439 | 5.000 | 1.51680 | 64.20 |
| 5 | 631.127 | 37.385 | | |
| 6 | 302.966 | 36.652 | 1.51680 | 64.20 |
| 7 | -695.289 | 499.945 | | |

*Example 4*

FIG. 4 shows a sectional view of a scanning optical system of Example 4. The scanning optical system of Example 4 includes, in order from the light beam entrance side toward the surface to be scanned side, the mirror 4a of the galvanometer mirror 4, the positive first lens L1 which is a meniscus lens, the negative second lens L2 which is a biconcave lens, and the positive third lens L3 which is a biconvex lens. Table 4 shows basic lens data of the scanning optical system of Example 4.

[Table 4]

| Example 4: Lens Data<br>Wavelength 660 nm, Deflection angle 40° (±20°), Aperture diameter Φ10 mm | | | | |
|---|---|---|---|---|
| Si (Surface number) | Ri (Radius of curvature) | Di (Surface distance) | Ndj (Refractive index) | νdj (Abbe number) |
| 1 | | 35.772 | | |
| 2 | -226.595 | 5.501 | 1.72825 | 28.32 |
| 3 | -70.507 | 3.045 | | |
| 4 | -76.529 | 6.199 | 1.51680 | 64.20 |
| 5 | 274.179 | 40.709 | | |
| 6 | 358.765 | 31.186 | 1.51680 | 64.20 |
| 7 | -294.825 | 527.588 | | |

*Example 5*

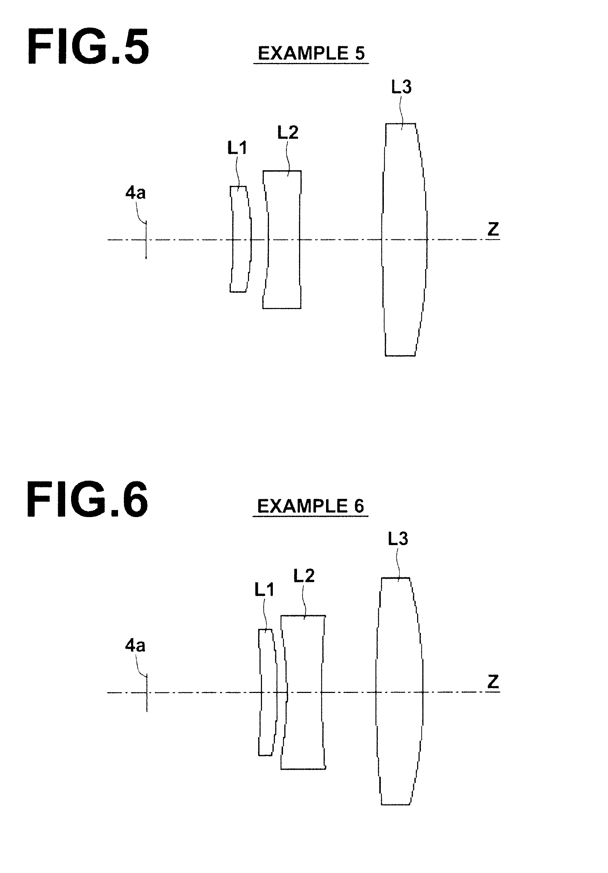

FIG. 5 shows a sectional view of a scanning optical system of Example 5. The scanning optical system of Example 5 includes, in order from the light beam entrance side toward the surface to be scanned side, the mirror 4a of the galvanometer mirror 4, the positive first lens L1 which is a meniscus lens, the negative second lens L2 which is a biconcave lens, and the positive third lens L3 which is a biconvex lens. Table 5 shows basic lens data of the scanning optical system of Example 5.

[Table 5]

| Example 5: Lens Data<br>Wavelength 660 nm, Deflection angle 40° (±20°), Aperture diameter Φ10 mm | | | | |
|---|---|---|---|---|
| Si (Surface number) | Ri (Radius of curvature) | Di (Surface distance) | Ndj (Refractive index) | νdj (Abbe number) |
| 1 | | 28.597 | | |
| 2 | -121.184 | 6.001 | 1.72825 | 28.32 |

(continued)

| Example 5: Lens Data<br>Wavelength 660 nm, Deflection angle 40° (±20°), Aperture diameter Φ10 mm | | | | |
|---|---|---|---|---|
| Si (Surface number) | Ri (Radius of curvature) | Di (Surface distance) | Ndj (Refractive index) | νdj (Abbe number) |
| 3 | -72.727 | 5.703 | | |
| 4 | -89.589 | 10.097 | 1.51680 | 64.20 |
| 5 | 404.823 | 27.302 | | |
| 6 | 437.867 | 14.997 | 1.51680 | 64.20 |
| 7 | -160.649 | 557.306 | | |

*Exampl e 6*

FIG. 6 shows a sectional view of a scanning optical system of Example 6. The scanning optical system of Example 6 includes, in order from the light beam entrance side toward the surface to be scanned side, the mirror 4a of the galvanometer mirror 4, the positive first lens L1 which is a meniscus lens, the negative second lens L2 which is a biconcave lens, and the positive third lens L3 which is a biconvex lens. Table 6 shows basic lens data of the scanning optical system of Example 6.

[Table 6]

| Example 6: Lens Data<br>Wavelength 660 nm, Deflection angle 40° (±20°), Aperture diameter Φ10 mm | | | | |
|---|---|---|---|---|
| Si (Surface number) | Ri (Radius of curvature) | Di (Surface distance) | Ndj (Refractive index) | νdj (Abbe number) |
| 1 | | 37.494 | | |
| 2 | -186.346 | 5.456 | 1.72825 | 28.32 |
| 3 | -105.749 | 3.102 | | |
| 4 | -108.047 | 11.435 | 1.51680 | 64.20 |
| 5 | 262.819 | 18.088 | | |
| 6 | 340.794 | 15.595 | 1.51680 | 64.20 |
| 7 | -139.940 | 558.834 | | |

*Comparative Example 1*

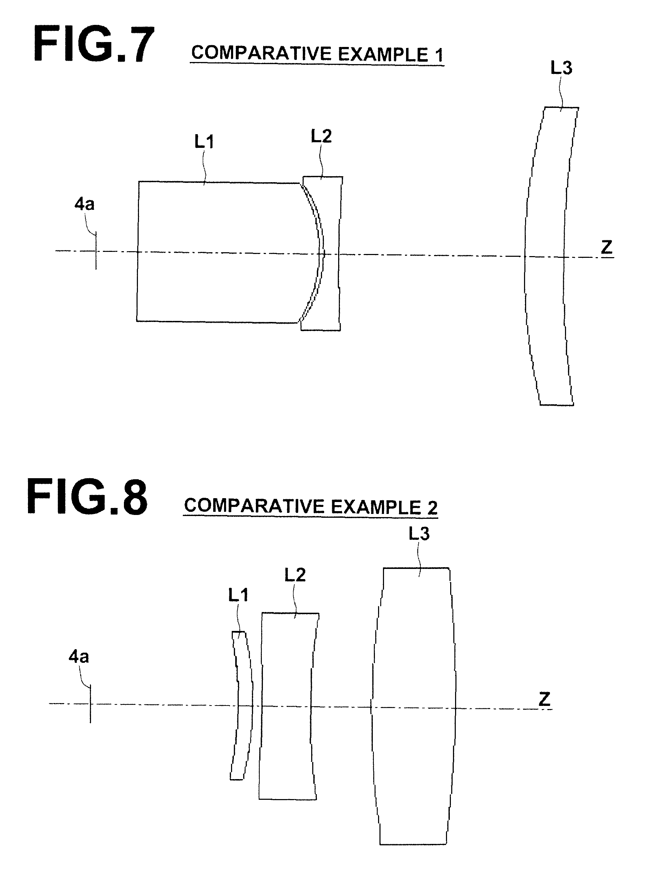

FIG. 7 shows a sectional view of a scanning optical system of Comparative Example 1 relative to the invention. The scanning optical system of Comparative Example 1 includes, in order from the light beam entrance side toward the surface to be scanned side, the mirror 4a of the galvanometer mirror 4, the positive first lens L1 which is a meniscus lens, the negative second lens L2 which is a biconcave lens, and the positive third lens L3 which is a meniscus lens. Table 7 shows basic lens data of the scanning optical system of Comparative Example 1.

[Table 7]

| Comparative Example 1: Lens Data<br>Wavelength 660 nm, Deflection angle 40° (±20°), Aperture diameter Φ10 mm | | | | |
|---|---|---|---|---|
| Si (Surface number) | Ri (Radius of curvature) | Di (Surface distance) | Ndj (Refractive index) | vdj (Abbe number) |
| 1 | | 13.811 | | |
| 2 | -239.425 | 59.394 | 1.72825 | 28.32 |
| 3 | -38.236 | 1.464 | | |
| 4 | -35.805 | 5.002 | 1.51680 | 64.20 |

(continued)

| Comparative Example 1: Lens Data<br>Wavelength 660 nm, Deflection angle 40° (±20°), Aperture diameter Φ10 mm | | | | |
|---|---|---|---|---|
| Si (Surface number) | Ri (Radius of curvature) | Di (Surface distance) | Ndj (Refractive index) | vdj (Abbe number) |
| 5 | 404.753 | 60.874 | | |
| 6 | 181.567 | 12.491 | 1.51680 | 64.20 |
| 7 | 270.520 | 496.975 | | |

*Comparative Example 2*

FIG. 8 shows a sectional view of a scanning optical system of Comparative Example 2 relative to the invention. The scanning optical system of Comparative Example 2 includes, in order from the light beam entrance side toward the surface to be scanned side, the mirror 4a of the galvanometer mirror 4, the positive first lens L1 which is a meniscus lens, the negative second lens L2 which is a biconcave lens, and the positive third lens L3 which is a biconvex lens. Table 8 shows basic lens data of the scanning optical system of Comparative Example 2.

[Table 8]

| Comparative Example 2: Lens Data<br>Wavelength 660 nm, Deflection angle 40° (±20°), Aperture diameter Φ10 mm | | | | |
|---|---|---|---|---|
| Si (Surface number) | Ri (Radius of curvature) | Di (Surface distance) | Ndj (Refractive index) | vdj (Abbe number) |
| 1 | | 48.693 | | |
| 2 | -107.627 | 4.789 | 1.72825 | 28.32 |
| 3 | -92.382 | 2.785 | | |
| 4 | -1119.685 | 15.893 | 1.51680 | 64.20 |
| 5 | 178.999 | 20.179 | | |
| 6 | 222.654 | 27.792 | 1.51680 | 64.20 |
| 7 | -326.799 | 528.878 | | |

[Table 9]

| | Comp.<br>Example 1 | Example 1 | Example 2 | Example 3 | Example 4 | Example 5 | Example 6 | Comp.<br>Example 2 |
|---|---|---|---|---|---|---|---|---|
| f | 511.5 | 509.2 | 508.5 | 510.3 | 511.5 | 510.1 | 508.8 | 510.9 |
| f1 | 56.2 | 65.1 | 70.0 | 90.0 | 140.0 | 240.0 | 330 | 800 |
| f2 | -63.7 | -69.6 | -72.9 | -85.6 | -115.6 | -141.7 | -147.3 | -298.9 |
| f3 | 1024.9 | 647.0 | 531.4 | 415.6 | 319.9 | 230.5 | 195.1 | 262 |
| | | | | | | | | |
| f1/f | 0.110 | 0.128 | 0.138 | 0.176 | 0.274 | 0.470 | 0.649 | 1.566 |
| f2/f (3) | -0.125 | -0.137 | -0.143 | -0.168 | -0.226 | -0.278 | -0.290 | -0.585 |
| f3/f (4) | 2.004 | 1.271 | 1.045 | 0.814 | 0.625 | 0.452 | 0.383 | 0.513 |
| f1/f2 | -0.882 | -0.935 | -0.961 | -1.051 | -1.211 | -1.694 | -2.240 | -2.676 |
| f1/f3 | 0.055 | 0.101 | 0.132 | 0.217 | 0.438 | 1.041 | 1.691 | 3.053 |
| 1/f1 (2) | 0.018 | 0.015 | 0.014 | 0.011 | 0.007 | 0.004 | 0.003 | 0.001 |
| f/f1 (1) | 9.101 | 7.828 | 7.264 | 5.670 | 3.654 | 2.125 | 1.542 | 0.639 |

(continued)

| | Comp. Example 1 | Example 1 | Example 2 | Example 3 | Example 4 | Example 5 | Example 6 | Comp. Example 2 |
|---|---|---|---|---|---|---|---|---|
| | | | | | | | | |
| Beam diameter d | 37.5 | 36.0 | 35.5 | 35.5 | 35.5 | 35.6 | 36.0 | 38.5 |

The present invention has been described with reference to the embodiments and examples. However, the scanning optical system of the invention is not limited to those of the above-described examples, and various modifications may be made to the invention. For example, the values of the radius of curvature, the surface distance, the refractive index and the Abbe number of each lens can be changed as appropriate.

Further, the scanning optical system of the invention is applicable not only to the above-described radiographic image reading apparatuses but also to other types of reading apparatuses and optical scanning recording apparatuses, for example, and can provide the same advantageous effects as described above for obtaining a desired scan beam diameter.

**Claims**

1.  A scanning optical system comprising:

    a galvanometer mirror (4) that reflects and deflects a light beam (2) emitted from a light source (1), a range of deflection angle of the galvanometer mirror (4) being 40° or less; and
    a fθ lens that focuses the deflected light beam on a surface to be scanned,
    wherein the fθ lens substantially consists of, in order from the galvanometer mirror side, a first lens (L1) which is a spherical lens having a positive refractive power, a second lens (L2) which is a spherical lens having a negative refractive power, and a third lens (L3) which is a spherical lens having a positive refractive power, and conditional expression (1) below is satisfied:

$$1.542 \leq f/f1 \leq 7.828 \qquad (1),$$

    where f is a focal length of the entire fθ lens system, and f1 is a focal length of the first lens (L1).

2.  The scanning optical system as claimed in claim 1, wherein conditional expression (1') below is satisfied:

$$2.125 \leq f/f1 \leq 7.264 \qquad (1').$$

3.  The scanning optical system as claimed in claim 1, wherein conditional expression (2) below is satisfied:

$$0.003 \leq 1/f1 \leq 0.015 \qquad (2).$$

4.  The scanning optical system as claimed in claim 1, wherein conditional expression (2') below is satisfied:

$$0.004 \leq 1/f1 \leq 0.014 \qquad (2')$$

5.  The scanning optical system as claimed in any one of claims 1 to 4, wherein conditional expression (3) below is satisfied:

$$-0.290 \leq f2/f \leq -0.137 \qquad (3),$$

where f2 is a focal length of the second lens (L2).

6. The scanning optical system as claimed in any one of claims 1 to 5, wherein conditional expression (4) below is satisfied:

$$0.383 \leq f3/f \leq 1.271 \qquad (4),$$

where f3 is a focal length of the third lens (L3).

7. The scanning optical system as claimed in any one of claims 1 to 6, wherein the deflected light beam is focused on a stimulable phosphor sheet used as the surface to be scanned.

8. An optical scanning device configured to scan a surface to be scanned with a light beam traveled through the scanning optical system as claimed in any one of claims 1 to 7.

9. The optical scanning device as claimed in claim 8, wherein the surface to be scanned is a stimulable phosphor sheet.

10. A radiographic image reading apparatus comprising the optical scanning device as claimed in claim 9, the apparatus being configured to detect photostimulated luminescent light emitted from each part of a stimulable phosphor sheet scanned with the optical scanning device to read a radiographic image recorded on the stimulable phosphor sheet.

# FIG.1

EXAMPLE 1

L3

L1

L2

4a

Z

# FIG.2

EXAMPLE 2

L3

L1

L2

4a

Z

# FIG.3

EXAMPLE 3

L3

L1

L2

4a

Z

# FIG.4

EXAMPLE 4

L3

L1 L2

4a

Z

# FIG.5

EXAMPLE 5

# FIG.6

EXAMPLE 6

# FIG.7   COMPARATIVE EXAMPLE 1

# FIG.8   COMPARATIVE EXAMPLE 2

# FIG.9

# FIG.10

# FIG.11

# FIG.12

Europäisches
Patentamt
European
Patent Office
Office européen
des brevets

# EUROPEAN SEARCH REPORT

**Application Number**

EP 14 17 5586

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 6 144 477 A (TAKEUCHI SHUICHI [JP]) 7 November 2000 (2000-11-07) * abstract * * | 1-10 | INV. G02B13/00 G02B9/14 |
| A | CN 101 324 697 A (SHENZHEN HANS LASER TECHNOLOGY [CN]) 17 December 2008 (2008-12-17) * abstract * * * pages 6-8 * * claim 1 * * figures 1-3 * | 1-10 | |
| A | JP S62 262812 A (MINOLTA CAMERA KK) 14 November 1987 (1987-11-14) * abstract * * | 1-10 | |
| X,P | US 2014/043662 A1 (NAKAYAMA HIROTOSHI [JP] ET AL) 13 February 2014 (2014-02-13) * paragraphs [0012], [0043] * * claim 1 * | 1,3,4,8,10 | |

**TECHNICAL FIELDS SEARCHED (IPC)**

G02B

The present search report has been drawn up for all claims

| Place of search | Date of completion of the search | Examiner |
|---|---|---|
| Berlin | 5 September 2014 | Moroz, Alexander |

EPO FORM 1503 03.82 (P04C01)

## ANNEX TO THE EUROPEAN SEARCH REPORT
## ON EUROPEAN PATENT APPLICATION NO.

EP 14 17 5586

This annex lists the patent family members relating to the patent documents cited in the above-mentioned European search report.
The members are as contained in the European Patent Office EDP file on
The European Patent Office is in no way liable for these particulars which are merely given for the purpose of information.

05-09-2014

| Patent document cited in search report | | Publication date | Patent family member(s) | | Publication date |
|---|---|---|---|---|---|
| US 6144477 | A | 07-11-2000 | JP<br>JP<br>US | 3421584 B2<br>2000047132 A<br>6144477 A | 30-06-2003<br>18-02-2000<br>07-11-2000 |
| CN 101324697 | A | 17-12-2008 | NONE | | |
| JP S62262812 | A | 14-11-1987 | NONE | | |
| US 2014043662 | A1 | 13-02-2014 | JP<br>US | 2014035397 A<br>2014043662 A1 | 24-02-2014<br>13-02-2014 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003228145 A
- JP 1309021 A
- JP 60053294 A
- JP 62262812 A
- JP 10186258 A

**Non-patent literature cited in the description**

- *Hihakai-Kensa,* 2012, vol. 61 (4), 146